# EUROPÄISCHE PATENTSCHRIFT

(11) **EP 1 223 089 B1**
(45) Veröffentlichungstag und Bekanntmachung des Hinweises auf die Patenterteilung: **12.01.2005**
(21) Anmeldenummer: 02090008.0
(22) Anmeldetag: 10.01.2002
(51) Int. Cl.: B60R 22/44, B60R 22/46

(54) **Sicherheitsgurtvorrichtung**
Seat belt device
Assemblage de ceinture de sécurité

(30) Priorität: 11.01.2001 DE 10101048
(43) Veröffentlichungstag der Anmeldung: 17.07.2002
(73) Patentinhaber: TAKATA-PETRI (Ulm) GmbH, 89081 Ulm (DE)
(72) Erfinder: Kopetzky, Robert, Dr., 91207 Lauf - Simonshofen (DE)
(74) Vertreter: Rummler, Felix Dipl. Ing.

(56) Entgegenhaltungen:
- GB-A- 1 210 323
- US-A- 4 572 543
- US-A- 5 297 752

## Beschreibung

Die Erfindung betrifft eine Sicherheitsgurtvorrichtung für Kraftfahrzeuge mit einem Sicherheitsgurt, einem Gurtaufroller und einem Antrieb für den Aufroller.

Eine derartige Sicherheitsgurtvorrichtung ist aus der britischen Patentschrift GB 1 210 323 bekannt. Dieses Sicherheitsgurtvorrichtung umfasst einen Sicherheitsgurt, einen Gurtaufroller, einen Antriebsmotor sowie zwei Schalter, mit denen die Drehrichtung des Antriebsmotors umschaltbar ist. Durch Wahl der Drehrichtung des Antriebsmotors kann in einen Komfortmodus mit in Abwickelrichtung angetriebenem Aufroller oder in einen Straffermodus mit in Aufwickelrichtung angetriebenem Aufroller geschaltet werden.

Es ist eine Aufgabe der Erfindung, eine Sicherheitsgurtvorrichtung der eingangs genannten Art zu schaffen, die bei möglichst einfachem Aufbau sowie sicherer und zuverlässiger Funktionsweise möglichst vielseitig einsetzbar ist.

Die Lösung dieser Aufgabe erfolgt ausgehend von einer Sicherheitsgurtvorrichtung der eingangs genannten Art durch die kennzeichnenden Merkmale des Anspruche 1 und insbesondere dadurch, dass ein Getriebe zwischen dem Antrieb und dem Aufroller sowie ein Getriebeschaltelement -nachfolgend kurz Schalter genannt- vorgesehen sind, wobei mit dem Schalter ausgehend von einem Freilaufmodus wenigstens eine Getriebekonfiguration einstellbar ist, die einem Komfortmodus mit in Abwickelrichtung angetriebenem Aufroller und/oder einem Straffermodus mit in Aufwickelrichtung angetriebenem Aufroller entspricht, und wobei der Umschalter mittels des Antriebs betätigbar ist.

Die erfindungsgemäße Sicherheitsgurtvorrichtung kann in wenigstens zwei Betriebsmodi betrieben werden, und zwar in einem Freilaufmodus und in zumindest einem Antriebsmodus. Der Freilaufmodus ermöglicht eine normale Benutzung des Sicherheitsgurtes im Normalbetrieb des Fahrzeugs, in dem der Aufroller frei drehbar ist. Handelt es sich bei dem Antriebsmodus um den Komfortmodus, so sorgt der Antrieb für ein automatisches Abwickeln des Gurtes, um dem Fahrzeuginsassen das Ausziehen des Gurtes zu erleichtern oder zu Beginn des Fahrbetriebs den Gurt an den Fahrzeuginsassen heranzureichen. Wenn es sich bei dem Antriebsmodus dagegen um den Straffermodus handelt, dann wird der Gurt mittels des Antriebs auf dem Aufroller aufgewickelt, um z.B. eine Gurtstrafffunktion zu realisieren.

Der Komfortmodus und/oder der Straffermodus können erfindungsgemäß mittels eines Schalters eingestellt werden, der durch den Antrieb betätigbar ist. Mittels des Schalters kann somit eine kraftschlüssige Verbindung zwischen dem Antrieb und dem Aufroller über das Getriebe hergestellt werden. Indem der Schalter mittels des Antriebs betätigt werden kann, sorgt der Antrieb automatisch selbst für die Herstellung der jeweils gewünschten kraftschlüssigen Verbindung.

Vorzugsweise kann die erfindungsgemäße Sicherheitsgurtvorrichtung in drei Betriebsmodi betrieben werden, und zwar ausgehend von dem Freilaufmodus wahlweise entweder im Komfortmodus oder im Straffermodus. Die Auswahl des jeweiligen Antriebsmodus kann durch die Betriebsweise des Antriebs getroffen werden. Die Unterscheidung zwischen Komfortmodus und Straffermodus kann beispielsweise bei gleicher Getriebekonfiguration allein durch verschiedene Antriebsrichtungen des Antriebs, durch verschiedene Getriebekonfigurationen und verschiedene Antriebsrichtungen des Antriebs oder bei gleicher Antriebsrichtung des Antriebs allein durch verschiedene Getriebekonfigurationen erfolgen. Bevorzugt ist es, wenn in jedem Fall mittels des Antriebs verschiedene Schalterstellungen realisiert werden können, die entweder der gleichen Getriebekonfiguration oder verschiedenen Getriebekonfigurationen entsprechen.

Gemäß einer bevorzugten Ausführungsform der Erfindung kann ein Startmoment des Antriebs in eine Schaltbewegung des Schalters umgesetzt werden.

Der Schalter kann hierdurch unmittelbar im Anschluß an das Einschalten des im Freilaufmodus ausgeschalteten Antriebs betätigt werden.

Eine weitere bevorzugte Ausführung der Erfindung schlägt vor, daß der Schalter mittels des Antriebs in wenigstens zwei verschiedene Schalterstellungen bewegbar ist.

Hierdurch ist es möglich, daß der Schalter in Abhängigkeit von der jeweils mittels des Antriebs realisierten Schalterstellung auf unterschiedliche Art und Weise mit dem Getriebe und/oder dem Antrieb zusammenwirkt, um beispielsweise verschiedene Getriebekonfigurationen einzustellen.

Des weiteren ist bevorzugt vorgesehen, daß der Schalter während des Komfortmodus und/oder des Straffermodus mittels des Antriebs in einer entsprechenden Schalterstellung gehalten ist.

Hierdurch ist es möglich, den Schalter zunächst unter Ausnutzung des Startmoments in eine dem Komfortmodus und/oder dem Straffermodus entsprechende Schalterstellung zu überführen und anschließend durch den laufenden Antrieb in dieser Schalterstellung zu halten. Der Antrieb ist dadurch nicht nur in der Lage, den jeweiligen Antriebsmodus automatisch selbst einzustellen, sondern der Antrieb sorgt außerdem für die Aufrechterhaltung der den Antriebsmodus ermöglichenden Schalterstellung.

Gemäß einem weiteren bevorzugten Ausführungsbeispiel der Erfindung sind mittels des Antriebs auswählbare Schalterstellungen von der Betriebsweise des Antriebs abhängig.

Folglich kann durch entsprechende Wahl der Betriebsweise des Antriebs gezielt die gewünschte Schalterstellung realisiert werden.

Bevorzugt ist es, wenn verschiedene Schalterstellungen vom Anlaufverhalten des Antriebs abhängig sind. Durch die Art und Weise, wie sich der Antrieb beim oder unmittelbar nach dem Einschalten verhält, kann hierbei unter den Schalterstellungen gewählt und somit insbesondere gezielt entweder der Komfortmodus oder der Straffermodus eingestellt werden.

Hierbei kann gemäß einer Ausführungsform der Erfindung vorgesehen sein, daß mittels des Schalters einstellbare Getriebekonfigurationen von der Schalterstellung unabhängig sind. Vorteilhaft ist dies in Getrieben, bei denen eine mittels des Schalters einstellbare Getriebekonfiguration sowohl den Komfortmodus als auch den Straffermodus ermöglicht und zwischen diesen Antriebsmodi durch die Betriebsweise des Antriebs, insbesondere durch dessen Antriebsrichtung unterschieden wird. Wenn die Schalterstellungen von der Betriebsweise, insbesondere der Antriebsrichtung, des Antriebs abhängig sind, dann ist damit keine Beeinträchtigung verbunden, da die Getriebekonfiguration von der Schalterstellung unabhängig ist.

In einer besonders bevorzugten praktischen Ausgestaltung der Erfindung umfaßt der Antrieb einen Elektromotor, wobei mittels des Antriebs auswählbare Schalterstellungen von dem Ansteuersignal für den Elektromotor abhängig sind.

Die zur Auswahl der jeweils gewünschten Schalterstellung gezielt veränderbare Charakteristik des Ansteuersignals kann beispielsweise das Vorzeichen des Ansteuersignals sein. Es kann somit durch Umpolen des Elektromotors die Antriebsrichtung gewechselt und auf diese Weise unter von der Antriebsrichtung abhängigen Schalterstellungen ausgewählt werden.

In einer weiteren bevorzugten Ausgestaltung der Erfindung umfaßt das Getriebe ein Planetengetriebe. Dabei ist es bevorzugt, wenn ein Sonnenrad des Planetengetriebes drehfest mit dem Antrieb verbunden und der Aufroller mittels Planetenräder des Planetengetriebes antreibbar ist. Hierbei kann der Aufroller als Planetenradträger ausgebildet und mit den Achsen der Planetenräder gekoppelt sein, während der Schalter mit einem Hohlrad des Planetengetriebes zusammenwirkt.

Es ist alternativ auch möglich, den Aufroller als Hohlrad eines Planetengetriebes auszubilden, wobei der Schalter mit einem weiteren, insbesondere als Planetenradträger ausgebildeten Getriebeteil zusammenwirken kann.

Gemäß einer weiteren bevorzugten Ausführungsform der Erfindung ist vorgesehen, daß der Schalter einen schwenkbar gelagerten Schalthebel umfaßt. Die Schwenkachse des Schalthebels verläuft vorzugsweise parallel zur Drehachse des Aufrollers.

Ferner ist es bevorzugt, wenn der Antrieb, das Getriebe, der Aufroller und/oder der Schalter in axialer Richtung relativ zueinander unbeweglich angeordnet sind.

Hierdurch wird eine vorteilhafte Kompaktbauweise ermöglicht.

Bevorzugt ist es des weiteren, wenn der Schalthebel ausgehend von einer Freilaufstellung in auswählbare Schalterstellungen jeweils gegen eine Rückstellkraft auslenkbar ist. Hierzu ist vorzugsweise eine Rückstellfeder vorgesehen.

Die Rückstellkraft gewährleistet eine definierte Freilauf- oder Neutralstellung des Schalters im Freilaufmodus.

In einem weiteren bevorzugten Ausführungsbeispiel der Erfindung ist vorgesehen, daß der Schalter im Komfortmodus und/oder im Straffermodus mit einem den Freilaufmodus ermöglichenden Freilaufteil des Getriebes zusammenwirkt.

Das Freilaufteil kann den Freilaufmodus dadurch ermöglichen, daß es bei ausgeschaltetem Antrieb gemeinsam mit dem sich während des Normalbetriebs des Fahrzeugs in Aufwickelrichtung und Abwickelrichtung drehenden Aufroller rotieren kann. In einer Variante der Erfindung handelt es sich bei dem Freilaufteil um das Hohlrad eines Planetengetriebes. Eine alternative Variante schlägt vor, als Freilaufteil ein weiteres Getriebeteil vorzusehen, das nicht als Hohlrad eines Planetengetriebes dient, sonderen als Planetenradträger ausgebildet ist.

Gemäß einem weiteren bevorzugten Ausführungsbeispiel der Erfindung erfolgt das Einstellen zumindest einer Getriebekonfiguration dadurch, daß das Freilaufteil des Getriebes durch den Schalter festgehalten wird.

In einer Variante der Erfindung ist das Getriebe derart ausgebildet, daß das Freilaufteil sowohl im Komfortmodus als auch im Straffermodus durch den Schalter festgehalten ist.

Der Eingriff des Schalters in das Getriebe erfolgt hierbei somit in beiden Antriebsmodi auf die gleiche Art und Weise. In einer alternativen Variante der Erfindung kann z.B. vorgesehen sein, daß das Freilaufteil des Getriebes lediglich in einem Antriebsmodus, z.B. im Straffermodus, durch den Schalter festgehalten ist, während im jeweils anderen Antriebsmodus, z.B. im Komfortmodus, das Freilaufteil durch den Schalter mit dem Antrieb gekoppelt ist. Bei dieser Variante können mit dem Schalter zwei verschiedene Getriebekonfigurationen eingestellt werden. In Abhängigkeit von der konkreten Ausgestaltung des Getriebes können sich die Getriebekonfigurationen insbesondere hinsichtlich des Übersetzungsverhältnisses und/oder bei gleicher Antriebsrichtung des Antriebs hinsichtlich der resultierenden Drehrichtung des Aufrollers voneinander unterscheiden.

Eine weitere bevorzugte Ausführungsform der Erfindung schlägt vor, daß der Schalter über eine Betätigungseinheit ansteuerbar ist. Die Betätigungseinheit ist bevorzugt zur Übertragung eines Startmoments des Antriebs auf den Schalter ausgebildet und kann vorzugsweise außerdem im Anschluß an eine Startmomentübertragung eine bevorzugt etwa konstante Haltekraft auf den Schalter übertragen.

Die Betätigungseinheit ist also bevorzugt derart ausgeführt, daß sie nicht nur ein nach dem Einschalten des Antriebs entstehendes Startmoment auf den Schalter übertragen kann, um auf diese Weise den Schalter zu betätigen, sondern die Betätigungseinheit ist außerdem in der Lage, eine konstante Haltekraft auf den Schalter auszuüben, nachdem dieser unter Ausnutzung des Startmoments in die gewünschte Schalterstellung gebracht worden ist. Mittes der Betätigungseinheit kann folglich nicht nur eine Getriebekonfiguration eingestellt werden, sondern eine einmal eingestellte Getriebekonfiguration außerdem solange aufrechterhalten werden, bis der Antrieb wieder ausgeschaltet wird.

Vorzugsweise umfaßt die Betätigungseinheit eine Viskosekupplung. Die Viskosekupplung gestattet die Übertragung des Startmoments zu Beginn einer Antriebsbewegung des Antriebs und die Übertragung einer insbesondere konstanten Haltekraft durch den laufenden Antrieb.

Gemäß einer weiteren bevorzugten praktischen Ausgestaltung der Erfindung umfaßt der Antrieb einen motorgetriebenen Riementrieb. Der vorzugsweise als Zahnriemen ausgebildete Antriebsriemen des Riementriebs wird in einer bevorzugten Variante der Erfindung dazu verwendet, eine Betätigungseinheit für den Schalter zu beaufschlagen. Eine Riemenscheibe des Antriebs ist vorzugsweise als ein Sonnenrad eines Planetengetriebes ausgebildet.

Weitere Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1a: eine perspektivische Darstellung einer Sicherheitsgurtvorrichtung gemäß einer Ausführungsform der Erfindung, und

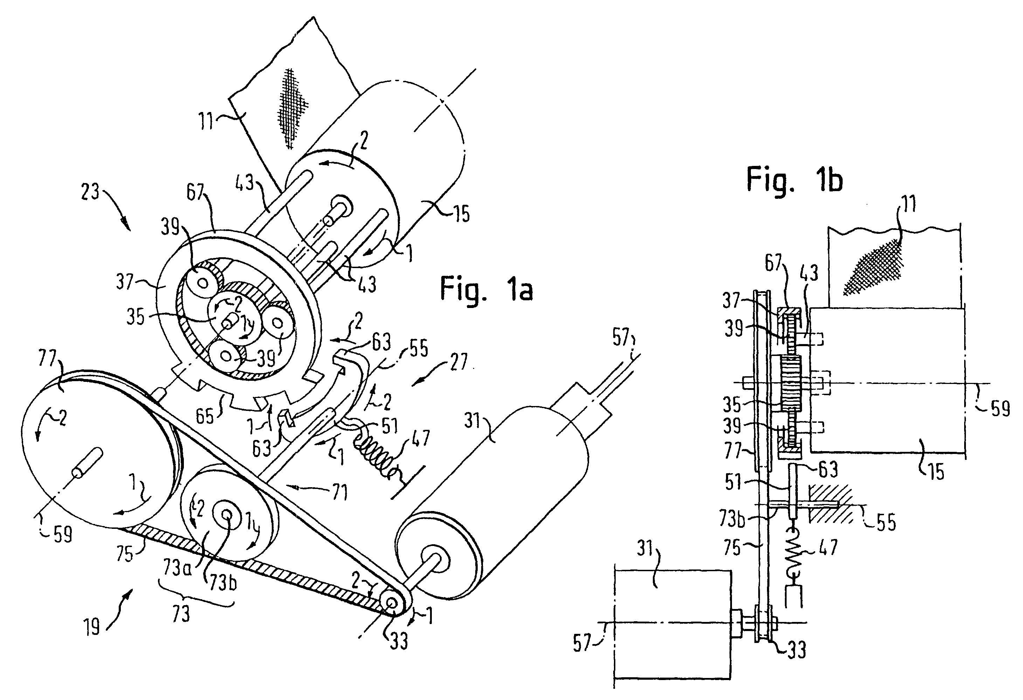

- Fig. 1b: die Sicherheitsgurtvorrichtung von Fig. 1a in einer Seitenansicht.

Die in Fig. 1a und 1b dargestellte erfindungsgemäße Sicherheitsgurtvorrichtung umfaßt einen Antrieb 19, der von einem Elektromotor 31 mit einer Antriebswelle 33 und einem Riementrieb mit einem Antriebsriemen 75 und einer Riemenscheibe 77 gebildet ist. Der Antriebsriemen 75 ist vorzugsweise als Zahnriemen ausgebildet.

Mittels des Antriebs 19 ist ein Gurtaufroller 15 wahlweise in einer Abwikkelrichtung 1 oder einer Aufwickelrichtung 2 antreibbar, um einen Sicherheitsgurt 11 entweder in einem Komfortmodus abzuwickeln oder in einem Straffermodus aufzuwickeln.

Zwischen der Riemenscheibe 77 und dem Aufroller 15 ist ein Planetengetriebe 23 vorgesehen. Der Antrieb 19 ist insofern ein Bestandteil des Getriebes 23, als die Nabe der Riemenscheibe 77 als Sonnenrad 35 des Planetengetriebes ausgebildet ist (vgl. Fig. 1b). Die Riemenscheibe 77 kann auch als Antriebsscheibe oder Antriebsrad bezeichnet werden.

Die Drehachse des Aufrollers 15 fällt mit der zentralen Drehachse 59 des Getriebes 23 und des Antriebsrades 77 zusammen und verläuft parallel versetzt zur Antriebsachse 57 des Motors 31.

Der Aufroller 15 dient als Planetenradträger und ist mit den Achsen 43 der Planetenräder 39 des Getriebes 23 gekoppelt. Das Hohlrad 37 des Getriebes 23 dient als ein Freilaufteil des Getriebes 23, das bei ausgeschaltetem Antrieb 19 gemeinsam mit dem Aufroller 15 relativ zu dem Sonnenrad 35 drehbar ist. Das Hohlrad 37 ermöglicht so einen Freilaufmodus der Vorrichtung.

Eine Konfiguration des Getriebes 23, in der bei eingeschaltetem Antrieb 19 der Aufroller 15 sowohl im Komfortmodus als auch im Straffermodus angetrieben werden kann, ist mittels eines Getriebeschaltelements 27- nachfolgend kurz Schalter genannt - einstellbar. Der Schalter 27 umfaßt einen schwenkbar gelagerten Schalthebel 51. Die Schwenkachse 55 des Schalthebels 51 verläuft parallel zur zentralen Drehachse 59.

Der mehrarmig ausgebildete Schalthebel 51 ist mittels einer Rückstellfeder 47 bei ausgeschaltetem Antrieb 19 in einer dem Freilaufmodus entsprechenden Neutral- oder Freilaufstellung gehalten, in der sich der Schalthebel 51 außer Eingriff mit dem Getriebe 23 befindet.

Der Schalthebel 51 ist über eine Betätigungseinheit 71 ansteuerbar, die eine Viskosekupplung 73 umfaßt. Die Viskosekupplung 73 weist ein mittels des Antriebsriemens 75 drehbares Antriebsrad 73a und eine Betätigungswelle 73b auf, die mit dem Schalthebel 51 verbunden ist. Über das viskose Medium der Kupplung 73 besteht somit eine kraftschlüssige Verbindung zwischen der Antriebswelle 33 des Motors 31 und dem Schalthebel 51.

Der mit dem Getriebe 23 zusammenwirkende Teil des Schalthebels 51 ist bügelförmig ausgebildet und umfaßt zwei Hebelarme, deren freien Enden als zahnartige Eingriffsabschnitte 63 ausgebildet sind. Mit den Haltezähnen 63 kann der Schalthebel 51 durch Verschwenken aus der Freilaufstellung in Halteaufnahmen 65 eines Eingriffsbereiches 67 eingreifen, der am Außenumfang des Hohlrades 37 ausgebildet ist. Der Eingriffsbereich 67 wird von mehreren in Umfangsrichtung verteilt angeordneten und sich radial nach außen erweiternden Vorsprüngen gebildet, deren Zwischenräume als die Halteaufnahmen 65 dienen.

Im Freilaufmodus befindet sich der Schalthebel 51 in der Neutralstellung. Der Aufroller 15 ist in beide Richtungen frei drehbar, da sich das als Freilaufteil des Getriebes 23 dienende Hohlrad 37, das durch die sich auf dem Sonnenrad 35 abrollenden Planetenräder 39 in Drehung versetzt wird, ebenfalls frei drehen kann.

Um ausgehend von dem Freilaufmodus den Komfortmodus einzustellen, wird der Elektromotor 31 eingeschaltet, wobei die Polarität derart gewählt ist, daß sich die Antriebswelle 33 in Richtung des Pfeils 1 dreht. Der Antriebsriemen 75 dreht nicht nur die Riemenscheibe 77, sondern außerdem das Antriebsrad 73a der Viskosekupplung 73, deren Antriebswelle 73b daraufhin den Schalthebel 51 gegen die Kraft der Rückstellfeder 47 in die entsprechende Richtung verschwenkt. Hierdurch wird der entsprechende Eingriffsabschnitt 63 in eine der Halteaufnahmen 65 des Hohlrades 37 eingesteuert.

Es wird folglich das Startmoment des Motors 31 ausgenutzt, um unmittelbar nach dem Einschalten des Motors 31 das Hohlrad 37 mittels des Schalters 27 festzuhalten, d.h. an einer Drehung zu hindern, wodurch eine Getriebekonfiguration eingestellt ist, in der sich das an der Riemenscheibe 77 ausgebildete Sonnenrad 35 dreht und der Aufroller 15 durch die Umlaufbewegung der Planetenräder 39 um die zentrale Drehachse 59 in Abwickelrichtung 1 angetrieben wird.

Das Übersetzungsverhältnis des Riementriebs beträgt vorzugsweise etwa 7 : 1, während das Übersetzungsverhältnis des Getriebes 23 bevorzugt etwa 3,6 : 1 beträgt. Dies ergibt insgesamt zwischen der Antriebswelle 33 des Motors 31 und dem Aufroller 15 ein Übersetzungsverhältnis von etwa 25 : 1.

Der Straffermodus unterscheidet sich von dem Komfortmodus dadurch, daß der Elektromotor 31 mit umgekehrter Polarität betrieben wird und sich die Antriebswelle 33 somit in Richtung des Pfeils 2 dreht. Die Betätigungseinheit 71 ist in beiden Richtungen wirksam, so daß im Straffermodus der Schalthebel 51 in die andere Richtung verschwenkt wird und der andere Eingriffsabschnitt 63 mit dem Eingriffsbereich 67 des Hohlrades 37 zusammenwirkt, um das Hohlrad 37 festzuhalten.

Im Komfortmodus und im Straffermodus ist somit die gleiche Getriebekonfiguration eingestellt. Das Gesamtübersetzungsverhältnis beträgt somit auch im Straffermodus etwa 25 : 1.

Die Viskosekupplung 73 ermöglicht es, daß die kraftschlüssige Verbindung zwischen dem Antrieb 19 und dem Schalthebel 51 im Anschluß an die Betätigung des Schalthebels 51 aufrechterhalten wird. Sobald nach dem Einschalten des Motors 31 der Schalthebel 51 maximal ausgelenkt ist, rutscht die Kupplung 73 durch, wobei aber weiterhin eine zumindest im wesentlichen konstante Haltekraft auf den Schalthebel 51 ausgeübt wird, die der Rückstellkraft der Feder 47 entgegenwirkt und dafür sorgt, daß die Getriebekonfiguration eingestellt bleibt, d.h. das Hohlrad 37 weiterhin festgehalten wird, solange der Motor 31 läuft.

Nach dem Ausschalten des Motors 31 ermöglicht es die Viskosekupplung 73, daß die Rückstellfeder 47 den Schalthebel 51 in die Neutralstellung zurückschwenken kann. Der Freilaufmodus stellt sich somit von selbst wieder ein.

### Bezugszeichenliste

- 1: Abwickelrichtung, Komfortmodus
- 2: Aufwickelrichtung, Straffermodus
- 11: Sicherheitsgurt
- 15: Gurtaufroller
- 19: Antrieb
- 23: Getriebe
- 27: Schalter
- 31: Elektromotor
- 33: Antriebswelle
- 35: Sonnenrad
- 37: Freilaufteil, Hohlrad
- 39: Planetenrad
- 43: Achse eines Planetenrades
- 47: Rückstellfeder
- 51: Schalthebel
- 55: Schwenkachse des Schalthebels
- 57: Antriebsachse des Motors
- 59: zentrale Drehachse
- 63: Eingriffsabschnitt
- 65: Halteaufnahme
- 67: Eingriffsbereich
- 71: Betätigungseinheit
- 73: Viskosekupplung
- 73a: Antriebsrad
- 73b: Antriebswelle
- 75: Antriebsriemen
- 77: Riemenscheibe, Antriebsrad

## Patentansprüche

1. Sicherheitsgurtvorrichtung für Kraftfahrzeuge, mit
- einem Sicherheitsgurt (11),
- einem Gurtaufroller (15),
- einem Antrieb (19) für den Aufroller (15),
- einem Getriebe (23) zwischen dem Antrieb (19) und dem Aufroller (15) **dadurch gekennzeichnet, dass** die Sicherheitsgurt vorrichtung ein mechanisches Getriebeschaltelement aufweist, das mit dem Antrieb und dem Getriebe zusammen wirkt und
- mit dem in einen Komfortmodus mit in Abwickelrichtung (1) angetriebenem Aufroller (15) und/oder in einen Straffermodus mit in Aufwickelrichtung (2) angetriebenem Aufroller (15) geschaltet werden kann,
- wobei die Sicherheitsgurtvorrichtung außerdem in einem Freilaufmodus betrieben werden kann, in dem der Antrieb und der Gurtaufroller getrennt sind, und wobei ausgehend von dem Freilaufmodus wenigstens eine Getriebekonfiguration einstellbar ist, die dem Komfortmodus und/oder dem Straffermodus entspricht,
wobei
- das Einstellen der wenigstens einen Getriebekonfiguration von dem Freilaufmodus ausgehend mit dem genannten Getriebeschaltelement (27) erfolgtund wobei
- das Getriebeschaltelement (27) hierzu mittels des Antriebs (19) betätigt wird.

2. Vorrichtung nach Anspruch 1,
**dadurch gekennzeichnet,**
**daß** ein Startmoment des Antriebs (19) in eine Schaltbewegung des Getriebeschaltelements (27) umsetzbar ist.

3. Vorrichtung nach Anspruch 1 oder 2,
**dadurch gekennzeichnet,**
**daß** das Getriebeschaltelement (27) mittels des Antriebs (19) in wenigstens zwei verschiedene Schalterstellungen bewegbar ist.

4. Vorrichtung nach einem der vorhergehenden Ansprüche,
**dadurch gekennzeichnet,**
**daß** das Getriebeschaltelement (27) während des Komfortmodus und/oder des Straffermodus mittels des Antriebs (19) in einer entsprechenden Schalterstellung gehalten ist.

5. Vorrichtung nach einem der vorhergehenden Ansprüche,
**dadurch gekennzeichnet,**
**daß** mittels des Antriebs (19) auswählbare Schalterstellungen von der Betriebsweise des Antriebs (19) abhängig sind, insbesondere vom Anlaufverhalten des Antriebs (19).

6. Vorrichtung nach einem der vorhergehenden Ansprüche,
**dadurch gekennzeichnet,**
**daß** eine mittels des Getriebeschaltelement (27) einstellbare Getriebekonfiguration von der Schalterstellung unabhängig ist.

7. Vorrichtung nach einem der vorhergehenden Ansprüche,
**dadurch gekennzeichnet,**
**daß** das Übersetzungsverhältnis des Getriebes (23) von mittels des Getriebeschaltelement (27) einstellbaren Getriebekonfigurationen unabhängig ist.

8. Vorrichtung nach einem der vorhergehenden Ansprüche,
**dadurch gekennzeichnet,**
**daß** mittels des Antriebs (19) auswählbare Schalterstellungen von dem Ansteuersignal für einen Elektromotor (31) des Antriebs (19) abhängig sind, insbesondere von dem Vorzeichen des Ansteuersignals.

9. Vorrichtung nach einem der vorhergehenden Ansprüche,
**dadurch gekennzeichnet,**
**daß** der Antrieb (19), das Getriebe (23), der Aufroller (15) und/oder das Getriebeschaltelement (27) in axialer Richtung relativ zueinander unbeweglich angeordnet sind.

10. Vorrichtung nach einem der vorhergehenden Ansprüche,
**dadurch gekennzeichnet,**
**daß** das Getriebe (23) ein Planetengetriebe umfaßt.

11. Vorrichtung nach einem der vorhergehenden Ansprüche,
**dadurch gekennzeichnet,**
**daß** ein Sonnenrad (35) eines Planetengetriebes drehfest mit dem Antrieb (19) verbunden ist.

12. Vorrichtung nach einem der vorhergehenden Ansprüche,
**dadurch gekennzeichnet,**
**daß** der Aufroller (15) mittels Planetenräder (39) eines Planetengetriebes antreibbar ist.

13. Vorrichtung nach einem der vorhergehenden Ansprüche,
**dadurch gekennzeichnet,**
**daß** der Aufroller (15) als Planetenradträger eines Planetengetriebes ausgebildet und insbesondere mit den Achsen (43) von Planetenrädern (39) gekoppelt ist.

14. Vorrichtung nach einem der vorhergehenden Ansprüche,
**dadurch gekennzeichnet,**
**daß** das Getriebeschaltelement (27) ausgehend von einer Freilaufstellung in auswählbare Schalterstellungen jeweils gegen eine Rückstellkraft bevorzugt einer Rückstellfeder (47) bewegbar ist.

15. Vorrichtung nach einem der vorhergehenden Ansprüche,
**dadurch gekennzeichnet,**
**daß** das Getriebeschaltelement (27) einen schwenkbar gelagerten Schalthebel (51) umfaßt.

16. Vorrichtung nach einem der vorhergehenden Ansprüche,
**dadurch gekennzeichnet,**
**daß** die Schwenkachse (55) eines Schalthebels (51) parallel zur Drehachse (59) des Aufrollers (15) verläuft.

17. Vorrichtung nach einem der vorhergehenden Ansprüche,
**dadurch gekennzeichnet,**
**daß** ein Schalthebel (51) mehrarmig ausgebildet ist, wobei bevorzugt die freien Enden der Hebelarme als Eingriffsabschnitte (63) ausgebildet sind.

18. Vorrichtung nach einem der vorhergehenden Ansprüche,
**dadurch gekennzeichnet,**
**daß** ein Schalthebel (51) bügelförmig ausgebildet ist.

19. Vorrichtung nach einem der vorhergehenden Ansprüche,
**dadurch gekennzeichnet,**
**daß** das Getriebeschaltelement (27) im Komfortmodus und/oder im Straffermodus mit einem den Freilaufmodus ermöglichenden Freilaufteil (37) des Getriebes (23) zusammenwirkt.

20. Vorrichtung nach einem der vorhergehenden Ansprüche,
**dadurch gekennzeichnet,**
**daß** das Freilaufteil ein Hohlrad (37) eines Planetengetriebes ist.

21. Vorrichtung nach einem der vorhergehenden Ansprüche,
**dadurch gekennzeichnet,**
**daß** ein Freilaufteil (37) im Komfortmodus und/oder im Straffermodus durch das Getriebeschaltelement (27) festgehalten ist.

22. Vorrichtung nach einem der vorhergehenden Ansprüche,
**dadurch gekennzeichnet,**
**daß** das Getriebeschaltelement (27) wenigstens zwei Eingriffsabschnitte (63) aufweist, die durch Betätigen des Getriebeschaltelements (27) in Eingriff mit dem Getriebe (23) steuerbar sind.

23. Vorrichtung nach einem der vorhergehenden Ansprüche,
**dadurch gekennzeichnet,**
**daß** wenigstens zwei Eingriffsabschnitte (63) des Getriebeschaltelements (27) jeweils zum Festhalten eines Freilaufteils (37) des Getriebes (23) ausgebildet sind.

24. Vorrichtung nach einem der vorhergehenden Ansprüche,
**dadurch gekennzeichnet,**
**daß** wenigstens ein bevorzugt als Freilaufteil dienendes Getriebeteil (37), vorzugsweise ein Hohlrad eines Planetengetriebes, insbesondere an seinem Außenumfang zumindest einen Eingriffsbereich (67) für das Getriebeschaltelement (27) aufweist.

25. Vorrichtung nach einem der vorhergehenden Ansprüche,
**dadurch gekennzeichnet,**
**daß** ein Eingriffsbereich (67) eines Getriebeteils (37) mehrere in Umfangsrichtung verteilte Halteaufnahmen (65) umfaßt, in die zumindest ein Eingriffsabschnitt (63) des Getriebeschaltelements (27) zum Festhalten des Getriebeteils (37) einsteuerbar ist.

26. Vorrichtung nach einem der vorhergehenden Ansprüche,
**dadurch gekennzeichnet,**
**daß** das Getriebeschaltelement (27) über eine Betätigungseinheit (71) ansteuerbar ist, die zur Übertragung eines Startmoments des Antriebs (19) und vorzugsweise außerdem im Anschluß an eine Startmomentübertragung zur Übertragung einer bevorzugt etwa konstanten Haltekraft auf das Getriebeschaltelement (27) ausgebildet ist.

27. Vorrichtung nach einem der vorhergehenden Ansprüche,
**dadurch gekennzeichnet,**
**daß** zwischen dem Antrieb (19) und der Betätigungseinheit (71) eine ständige Wirkverbindung besteht.

28. Vorrichtung nach einem der vorhergehenden Ansprüche,
**dadurch gekennzeichnet,**
**daß** die Betätigungseinheit (71) eine Viskosekupplung (73) umfaßt.

29. Vorrichtung nach einem der vorhergehenden Ansprüche,
**dadurch gekennzeichnet,**
**daß** der Antrieb (19) einen Elektromotor (31) umfaßt.

30. Vorrichtung nach einem der vorhergehenden Ansprüche,
**dadurch gekennzeichnet,**
**daß** der Antrieb (19) einen motorgetriebenen Riementrieb (75, 77) umfaßt.

31. Vorrichtung nach einem der vorhergehenden Ansprüche,
**dadurch gekennzeichnet,**
**daß** eine Riemenscheibe (77) des Antriebs (19) als eine Antriebsscheibe für das Getriebe (23) und insbesondere als ein Sonnenrad (35) eines Planetengetriebes (23) ausgebildet ist.

32. Vorrichtung nach einem der vorhergehenden Ansprüche,
**dadurch gekennzeichnet,**
**daß** eine Betätigungseinheit (71) für das Getriebeschaltelement (27) über einen Antriebsriemen (75) eines Riementriebs des Antriebs (19) beaufschlagbar ist.

## Claims

1. Seat belt device for motor vehicles, having
- a seat belt (11),
- a seat belt retractor (15),
- a drive (19) for the retractor (15),
- a gear mechanism (23) between the drive (19) and the retractor (15), **characterized in that** the seat belt device has a mechanical gear switching element which interacts with the drive and the gear mechanism and
- with which it is possible to switch to a comfort mode with the retractor (15) driven in the unwinding direction (1) and/or into a taut mode with the retractor (15) driven in the winding-on direction (2),
- wherein the seat belt device can also be operated in a free-wheeling mode in which the drive and the seat belt retractor are separated, and where at least one gear mechanism configuration which corresponds to the comfort mode and/or the taut mode can be set starting from the free-wheeling mode, wherein
- the at least one gear mechanism configuration is set starting from the free-wheeling mode using the aforesaid gear mechanism switching element (27), and where
- the gear mechanism switching element (27) is actuated for this purpose by means of the drive (19).

2. Device according to Claim 1, **characterized in that** a starting torque of the drive (19) can be converted into a switching movement of the gear mechanism switching element (27).

3. Device according to Claim 1 or 2, **characterized in that** the gear mechanism switching element (27) can be moved into at least two different switch positions by means of the drive (19).

4. Device according to one of the preceding claims, **characterized in that** the gear mechanism switching element (27) is held in a corresponding switch position during the comfort mode and/or the taut mode by means of the drive (19).

5. Device according to one of the preceding claims, **characterized in that** switch positions which can be selected by means of the drive (19) are dependent on the mode of operation of the drive (19), in particular on the starting-up behaviour of the drive (19).

6. Device according to one of the preceding claims, **characterized in that** a gear mechanism configuration which can be set by means of the gear mechanism switching element (27) is independent of the switch position.

7. Device according to one of the preceding claims, **characterized in that** the transmission ratio of the gear mechanism (23) is independent of gear mechanism configurations which can be set by means of the gear mechanism switching element (27).

8. Device according to one of the preceding claims, **characterized in that** switch positions which can be selected by means of the drive (19) are dependent on the actuation signal for an electric motor (31) of the drive (19), in particular on the sign of the actuation signal.

9. Device according to one of the preceding claims, **characterized in that** the drive (19), the gear mechanism (23), the seat belt retractor (15) and/or the gear mechanism switching element (27) are arranged so as to be incapable of moving in relation to one another in the axial direction.

10. Device according to one of the preceding claims, **characterized in that** the gear mechanism (23) comprises a planetary gear mechanism.

11. Device according to one of the preceding claims, **characterized in that** a sun wheel (35) of a planetary gear mechanism is connected to the drive (19) so as to rotate with it.

12. Device according to one of the preceding claims, **characterized in that** the retractor (15) can be driven by means of planet wheels (39) of a planetary gear mechanism.

13. Device according to one of the preceding claims, **characterized in that** the retractor (15) is embodied as a planet wheel carrier of a planetary gear mechanism and is in particular coupled to the axles (43) of planet wheels (39).

14. Device according to one of the preceding claims, **characterized in that** the gear mechanism switching element (27) can be moved from a free-wheeling position into selectable switch positions, in each case counter to a restoring force of preferably a restoring spring (47).

15. Device according to one of the preceding claims, **characterized in that** the gear mechanism switching element (27) comprises a pivotable mounted switching lever (51).

16. Device according to one of the preceding claims, **characterized in that** the pivoting axis (55) of a switching lever (51) extends parallel to the axis (59) of rotation of the retractor (15).

17. Device according to one of the preceding claims, **characterized in that** a switching lever (51) is of multi-armed design, wherein the free ends of the lever are preferably embodied as engagement sections (63).

18. Device according to one of the preceding claims, **characterized in that** a switching lever (51) is embodied in the form of a clip.

19. Device according to one of the preceding claims, **characterized in that** the gear mechanism switching element (27) interacts in the comfort mode and/or in the taut mode with a free-wheeling part (37), permitting the free-wheeling mode, of the gear mechanism (23).

20. Device according to one of the preceding claims, **characterized in that** the free-wheeling part is an internally toothed gear (37) of a planetary gear mechanism.

21. Device according to one of the preceding claims, **characterized in that** a free-wheeling part (37) is secured by the gear mechanism switching element (27) in the comfort mode and/or in the taut mode.

22. Device according to one of the preceding claims, **characterized in that** the gear mechanism switching element (27) has at least two engagement sections (63) which can be controlled by activating the gear mechanism switching element (27) in engagement with the gear mechanism (23).

23. Device according to one of the preceding claims, **characterized in that** at least two engagement sections (63) of the gear mechanism switching element (27) are each designed to secure a free-wheeling part (37) of the gear mechanism (23).

24. Device according to one of the preceding claims, **characterized in that** at least one gear mechanism part (37) which preferably functions as a free-wheeling part, preferably an internally toothed gear of a planetary gear mechanism, in particular on its outer circumference has at least one engagement region (67) for the gear mechanism switching element (27).

25. Device according to one of the preceding claims, **characterized in that** an engagement region (67) of a gear mechanism part (37) comprises a plurality of securing receptacles (65) which are distributed in the circumferential direction and into which at least one engagement section (63) of the gear mechanism switching element (27) can be inserted in order to secure the gear mechanism part (37).

26. Device according to one of the preceding claims, **characterized in that** the gear mechanism switching element (27) can be actuated by means of an actuation unit (71) which is designed to transmit a starting torque of the drive (19), and preferably also to transmit a preferably approximately constant securing force to the gear mechanism switching element (27) after transmitting a starting torque.

27. Device according to one of the preceding claims, **characterized in that** there is a constant effective connection between the drive (19) and the actuation unit (71).

28. Device according to one of the preceding claims, **characterized in that** the actuation unit (71) comprises a viscous clutch (73).

29. Device according to one of the preceding claims, **characterized in that** the drive (19) comprises an electric motor (31).

30. Device according to one of the preceding claims, **characterized in that** the drive (19) comprises a motor-operated belt drive (75, 77).

31. Device according to one of the preceding claims, **characterized in that** a belt pulley (77) of the drive (19) is embodied as a drive pulley for the gear mechanism (23), and in particular as a sun wheel (35) of a planetary gear mechanism (23).

32. Device according to one of the preceding claims, **characterized in that** an actuation unit (71) for the gear mechanism switching element (27) can be acted on via a drive belt (75) of a belt drive of the drive (19).

## Revendications

1. Dispositif de ceinture de sécurité pour véhicules automobiles, comprenant :
- une ceinture de sécurité (11) ;
- un enrouleur de ceinture (15) ;
- un entraînement (19) pour l'enrouleur (15) ;
- une transmission (23) entre l'entraînement (19) et l'enrouleur (15), **caractérisé en ce que** :
- le dispositif de ceinture de sécurité comporte un élément mécanique de commutation de transmission qui coopère avec l'entraînement et avec la transmission ; et au moyen duquel
- il est possible de commuter vers un mode de confort avec l'enrouleur (15) entraîné dans la direction de déroulement (1) et/ou vers un mode de tensionnement avec l'enrouleur (15) entraîné dans la direction d'enroulement (2),
et dans lequel :
- le dispositif de ceinture de sécurité peut être mis en service en outre dans un mode de course libre dans lequel l'entraînement et l'enrouleur de ceinture sont séparés ; et
- en partant du mode de course libre, il est possible d'établir au moins une configuration de transmission qui correspond au mode de confort et/ou au mode de tensionnement,
et dans lequel :
- l'établissement de ladite au moins une configuration de transmission a lieu avec l'élément de commutation de transmission mentionné, en partant du mode de course libre ; et
- l'élément de commutation de transmission (27) est actionné à ces fins au moyen de l'entraînement (19).

2. Dispositif selon la revendication 1, **caractérisé en ce qu'**un couple de démarrage de l'entraînement (19) peut être converti en un mouvement de commutation de l'élément de commutation de transmission.

3. Dispositif selon l'une ou l'autre des revendications 1 et 2, **caractérisé en ce que** l'élément de commutation de transmission (27) peut être déplacé au moyen de l'entraînement (19) dans au moins deux différentes positions de commutation.

4. Dispositif selon l'une des revendications précédentes, **caractérisé en ce que** l'élément de commutation de transmission (27) est maintenu dans une position de commutation correspondante pendant le mode de confort et/ou le mode de tensionnement au moyen de l'entraînement (19).

5. Dispositif selon l'une des revendications précédentes, **caractérisé en ce que** des positions de commutation pouvant être sélectionnées au moyen de l'entraînement (19) dépendent du mode de service de l'entraînement (19), en particulier du comportement de l'entraînement (19) au démarrage.

6. Dispositif selon l'une des revendications précédentes, **caractérisé en ce qu'**une configuration de transmission pouvant être ajustée au moyen de l'élément de commutation de transmission (27) est indépendante de la position de commutation.

7. Dispositif selon l'une des revendications précédentes, **caractérisé en ce que** le rapport de multiplication de la transmission (23) est indépendant des configurations de transmission pouvant être ajustées au moyen de l'élément de commutation de transmission (27).

8. Dispositif selon l'une des revendications précédentes, **caractérisé en ce que** des positions de commutation pouvant être sélectionnées au moyen de l'entraînement (19) dépendent du signal de pilotage pour un électromoteur (31) de l'entraînement (19), en particulier du signe du signal de pilotage.

9. Dispositif selon l'une des revendications précédentes, **caractérisé en ce que** l'entraînement (19), la transmission (23), l'enrouleur (15) et/ou l'élément de commutation de transmission (27) sont agencés relativement sans mobilité les uns par rapport aux autres en direction axiale.

10. Dispositif selon l'une des revendications précédentes, **caractérisé en ce que** la transmission (23) comporte une transmission planétaire.

11. Dispositif selon l'une des revendications précédentes, **caractérisé en ce qu'**une roue solaire (35) d'une transmission planétaire est reliée solidaire en rotation à l'entraînement (19).

12. Dispositif selon l'une des revendications précédentes, **caractérisé en ce que** l'enrouleur (15) peut être entraîné au moyen de roues planétaires (39) d'une transmission planétaire.

13. Dispositif selon l'une des revendications précédentes, **caractérisé en ce que** l'enrouleur (15) est réalisé comme support de roue planétaire d'une transmission planétaire et est accouplé en particulier avec les axes (43) de roues planétaires (39).

14. Dispositif selon l'une des revendications précédentes, **caractérisé en ce que** l'élément de commutation de transmission (27) peut être déplacé dans des positions de commutation pouvant être sélectionnées, en partant d'une position de course libre, respectivement à l'encontre d'une force de rappel, de préférence d'un ressort de rappel (47).

15. Dispositif selon l'une des revendications précédentes, **caractérisé en ce que** l'élément de commutation de transmission (27) comporte un levier de commutation (51) monté en pivotement.

16. Dispositif selon l'une des revendications précédentes, **caractérisé en ce que** l'axe de pivotement (55) d'un levier de commutation (51) s'étend parallèlement à l'axe de rotation (59) de l'enrouleur (15).

17. Dispositif selon l'une des revendications précédentes, **caractérisé en ce qu'**un levier de commutation (51) est réalisé à plusieurs bras, les extrémités libres des bras du levier étant de préférence réalisées comme tronçons d'engagement (63).

18. Dispositif selon l'une des revendications précédentes, **caractérisé en ce qu'**un levier de commutation (5 1 ) est réalisé en forme de chape.

19. Dispositif selon l'une des revendications précédentes, **caractérisé en ce que**, dans le mode de confort et/ou dans le mode de tensionnement, l'élément de commutation de transmission (27) coopère avec une pièce de course libre (37) de la transmission (23), laquelle permet le mode de course libre.

20. Dispositif selon l'une des revendications précédentes, **caractérisé en ce que** la pièce de course libre est une couronne creuse (37) d'une transmission planétaire.

21. Dispositif selon l'une des revendications précédentes, **caractérisé en ce qu'**une pièce de course libre (37) est maintenue fermement par l'élément de commutation de transmission (27) dans le mode de confort et/ou dans le mode de tensionnement.

22. Dispositif selon l'une des revendications précédentes, **caractérisé en ce que** l'élément de commutation de transmission (27) présente au moins deux tronçons d'engagement (63) qui peuvent être commandés en actionnant l'élément de commutation de transmission (27) en engagement avec la transmission (23).

23. Dispositif selon l'une des revendications précédentes, **caractérisé en ce qu'**au moins deux tronçons d'engagement (63) de l'élément de commutation de transmission (27) sont réalisés respectivement pour immobiliser une pièce de course libre (37) de la transmission (23).

24. Dispositif selon l'une des revendications précédentes, **caractérisé en ce qu'**au moins une pièce de transmission (37) servant de préférence de pièce de course libre, de préférence une couronne creuse d'une transmission planétaire, présente au moins une zone d'engagement (67) pour l'élément de commutation de transmission (27), en particulier sur sa circonférence extérieure.

25. Dispositif selon l'une des revendications précédentes, **caractérisé en ce qu'**une zone d'engagement (67) d'une pièce de transmission (37) comporte plusieurs logements de maintien (65) répartis dans la direction circonférentielle, dans lesquels au moins un tronçon d'engagement (63) de l'élément de commutation de transmission (27) peut être commandé pour immobiliser la pièce de transmission (37).

26. Dispositif selon l'une des revendications précédentes, **caractérisé en ce que** l'élément de commutation de transmission (27) peut être piloté via une unité d'actionnement (71) qui est réalisée pour transmettre un couple de démarrage de l'entraînement (19) et, de préférence en supplément, à la suite du transfert d'un couple de démarrage, pour transmettre une force de maintien de préférence approximativement constante sur l'élément de commutation de transmission (27).

27. Dispositif selon l'une des revendications précédentes, **caractérisé en ce qu'**une liaison d'action permanente existe entre l'entraînement (19) et l'unité d'actionnement (71).

28. Dispositif selon l'une des revendications précédentes, **caractérisé en ce que** l'unité d'actionnement (71) comporte un accouplement visqueux (73).

29. Dispositif selon l'une des revendications précédentes, **caractérisé en ce que** l'entraînement (19) comporte un électromoteur (31).

30. Dispositif selon l'une des revendications précédentes, **caractérisé en ce que** l'entraînement (19) comporte un entraînement à courroie motorisé (75, 77).

31. Dispositif selon l'une des revendications précédentes, **caractérisé en ce qu'**une poulie à courroie (77) de l'entraînement (19) est réalisée comme une poulie d'entraînement pour la transmission (23) et en particulier comme une roue solaire (35) d'une transmission planétaire (23).

32. Dispositif selon l'une des revendications précédentes, **caractérisé en ce qu'**une unité d'actionnement (71) pour l'élément de commutation de transmission (27) peut être attaquée via une courroie d'entraînement (75) d'un entraînement à courroie de l'entraînement (19).
